# NOUVEAU FASCICULE DE BREVET EUROPEEN

(11) **EP 0 654 851 B2**
(45) Date de publication et mention de la décision concernant l'opposition: **10.08.2005**
(45) Mention de la délivrance du brevet: 20.01.1999
(21) Numéro de dépôt: 94402595.6
(22) Date de dépôt: 16.11.1994
(51) Int. Cl.: H01R 9/24, H01R 4/24, H04Q 1/14

(54) **Réglette de raccordement équipée de contacts asymétriques**
Anschlussklemmleiste ausgerüstet mit asymetrischen Kontakten
Terminal block comprising asymmetric contacts

(30) Priorité: 18.11.1993 FR 9313783
(43) Date de publication de la demande: 24.05.1995
(73) Titulaire: Nexans, 75008 Paris (FR)
(72) Inventeur: Dussausse, Jean-Paul, F-75017 Paris (FR); Prudhon, Daniel, F-71960 Pierreclos (FR)
(74) Mandataire: Feray, Valérie

(56) Documents cités:
- EP-A- 0 370 380
- CH-A- 659 546
- FR-A- 2 538 208
- US-A- 4 512 620
- US-A- 4 850 887
- US-A- 5 160 273
- US-A- 5 226 835

## Description

La présente invention concerne les équipements de raccordement utilisés dans les réseaux locaux informatiques. Elle porte plus particulièrement sur une réglette de raccordement équipée de contacts asymétriques.

Ces équipements ou réglettes de raccordement de réseaux informatiques comportent de manière connue deux rangées de contacts parallèles et en vis-à-vis. Ces contacts sont affectés par paires successives sur l'une des rangées à des lignes entrantes et sur l'autre rangée à des lignes sortantes, à raccorder aux lignes entrantes. Ils ont une partie terminale accessible sur une face de la réglette, qui est en général munie d'une fourche autodénudante, pour le raccordement des deux conducteurs des différentes lignes. Ils ont leur partie terminale opposée, intérieure à la réglette et dite de liaison élastique des contacts en vis-à-vis, qui est arquée pour la liaison en pression de chaque contact à celui en vis-à-vis dans la réglette.

Ces contacts sont répartis à pas constant sur chacune des deux rangées, choisi aussi faible que possible pour des raisons d'impédance des lignes qui y sont raccordées et pour des raisons de moindre encombrement de la réglette, si bien que le couplage magnétique entre les deux conducteurs d'une même ligne est le même que celui entre les deux conducteurs des lignes voisines. Il en résulte une diaphonie aux fréquences élevées d'utilisation, typiquement de 1 à 100 MHz et voire supérieures, entre lignes situées côte à côte sur la réglette.

Pour remédier à ce problème, une solution connue consiste à augmenter le pas des contacts, pour diminuer en conséquence les couplages entre lignes. Il en résulte cependant une rupture d'impédance des lignes raccordées aux contacts et une augmentation de la taille des réglettes.

Le document CH-A-659 546 divulgue un contact autodénudant et une barrette de raccordement équipée de tels contacts.

Le contact autodénudant ainsi connu est de type double, c'est-à-dire formé de deux contacts simples et plats, qui sont identiques et en vis-à-vis et sont reliés l'un à l'autre par leurs portions terminales non autodénudantes d'extrémité commune. La portion terminale autodénudante de chaque contact simple est en outre prévue décalée axialemment par rapport à l'autre portion terminale non autodénudante de ce contact simple et est de largeur plus importante que celle de cette autre portion terminale.

La réglette de raccordement connue par ce document comporte deux rangées de tels contacts autodénudants simples en vis-à-vis, deux contacts simples en vis-à-vis constituant le contact double tel que précité. Le long de chacune des rangées, les contacts simples sont montés identiquement côte à côte, en présentant un entraxe d'une première valeur constante entre leurs portions terminales autodénudantes et un entraxe d'une autre valeur constante entre leurs autres portions terminales non autodénudantes.

Ces autres portions terminales non autodénudantes des contacts simples des deux rangées définissent entre elles une série de broches d'enfichage dans une carte de circuit imprimé. L'entraxe entre ces broches doit être prévu suffisant pour éviter un couplage et des problèmes de diaphonie entre lignes raccordées aux contacts de la réglette.

La présente invention a pour but de remédier aux problèmes des solutions antérieures ci-avant.

Elle a pour objet une réglette de raccordement selon la revendication unique.

Les caractéristiques et avantages de la présente invention ressortiront de la description faite ci-après en regard des dessins ci-annexés. Dans ces dessins:
- La figure 1 représente en élévation un contact selon l'invention,
- Les figures 2 et 3 sont une vue en coupe transversale et une vue partielle en coupe axiale d'une réglette de raccordement équipée de contacts selon la figure 1.

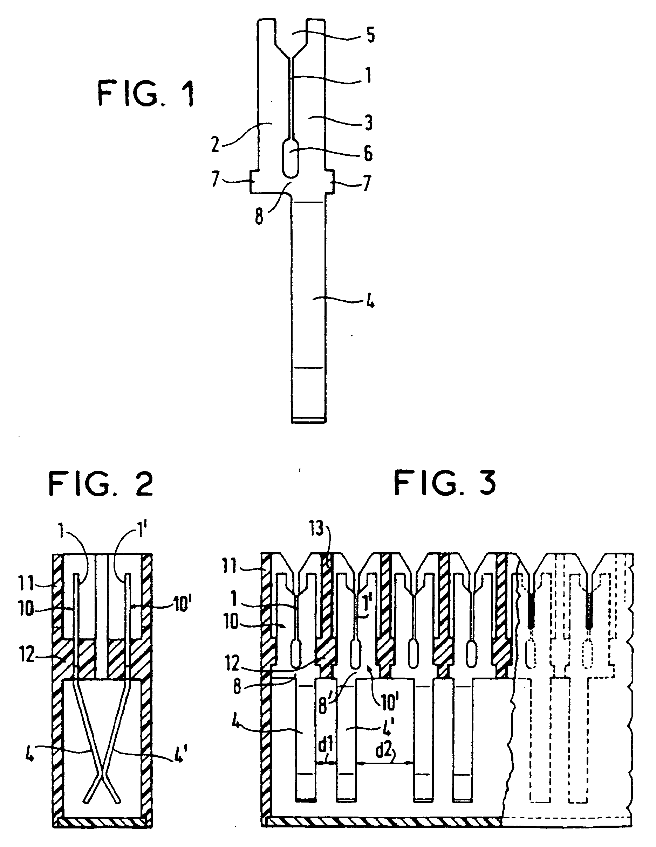

Le contact selon l'invention est un contact dit plat. Ainsi que montré dans la figure 1, il comporte une fourche ou fente autodénudante 1, sensiblement axiale sur une partie terminale de ce contact et définissant deux branches latérales 2 et 3 de part et d'autre d'elle. Il comporte une queue de liaison 4 définie sur l'autre partie terminale du contact. Cette queue de liaison est arquée d'un côté du contact plan initial, pour sa liaison en pression avec la queue de liaison d'un autre contact analogue en vis-à-vis dans une réglette de connexion (figure 2). L'une des extrémités de la fourche autodénudante est ouverte par un Vé d'entrée 5 sur l'extrémité du contact. Son autre extrémité débouche dans une lumière d'élasticité 6 prévue entre les branches 2 et 3, se prolongeant à cet effet au delà de la fourche autodénudante. Deux dents latérales 7 sont prévues sur les branches 2 et 3, légèrement au delà de la lumière d'élasticité 6, pour la rétention du contact. Les deux branches 2 et 3, qui sont solidaires l'une de l'autre au delà de la lumière 6, définissent ensemble à ce niveau une partie de couplage 8 reliant les deux branches à la queue de liaison.

Selon l'invention, la queue de liaison 4 est décentrée axialement par rapport à la fourche autodénudante 1 et à la partie de couplage alignée axialement sur cette fourche. Elle s'étend sensiblement d'un seul côté de cette fourche autodénudante et est prévue sensiblement de même largeur que l'une des branches 2 et 3, soit de largeur sensiblement moitié de la partie terminale autodénudante du contact.

Sur le contact, la queue de liaison 4 vient pratiquement prolonger l'une des branches 2 ou 3, alors que l'autre branche est tronquée au delà de la partie de couplage 8.

Les figures 2 et 3 montrent une réglette équipée selon l'invention de tels contacts, désignés sous la référence globale 10 ou 10', pour les deux contacts en vis-à-vis ou les deux contacts d'une paire. Ces contacts 10 et 10' sont en deux rangées. Ils définissent des paires successives de contacts sur chaque rangée et sont en vis-à-vis d'une rangée à l'autre, dans un corps isolant 11. Ils sont montés traversants dans une paroi intermédiaire 12 prévue le long du corps, en étant retenus dans cette paroi 12. Ils sont de préférence séparés les uns des autres par des cloisons avant 13, prévues saillantes sur l'avant de cette paroi intermédiaire. Les fourches autodénudantes 1 ou 1' sont accessibles sur la face avant de la réglette. Les queues de liaison 4 ou 4' des contacts en vis-à-vis des deux rangées sont en pression élastique dans la partie intérieure arrière de la réglette. Les parties de couplage 8 et 8' définissent avec les cloisons 12 entre elles le pas de montage des contacts.

En outre, ainsi qu'il apparaît dans la figure 3, les deux contacts 10 et 10' de chaque paire sont d'un premier et d'un deuxième type, pour lesquels leur queue de liaison 4 ou 4' est à droite ou à gauche de la fourche autodénudante 1 ou 1' de chacun d'eux, de sorte que l'entraxe entre les queues de liaison 4 et 4' des contacts d'une même paire a une valeur réduite d1 par rapport à la valeur d2 de l'entraxe entre les queues de liaison des contacts de paires adjacentes. Deux contacts en vis-à-vis 10 et 10' sont également l'un du premier type et l'autre du deuxième (figure 2).

La disposition décentrée axialement de la queue de liaison de chaque contact et le montage alterné des deux types de contacts sur chaque rangée permettent une amélioration notable de la diaphonie entre les lignes dites d'entrée et de sortie raccordées aux fourches autodénudantes des paires de contacts des deux rangées, dans les réglettes de raccordement utilisées dans les réseaux locaux informatiques. Cette amélioration de diaphonie est en moyenne de l'ordre de 4 à 6 dB, dans une gamme de fréquence de 1 à 100 MHz. Elle est obtenue sans modification dimensionnelle de la réglette, ni modification des parties autodénudantes des contacts ou des dispositions relatives de ces parties autodénudantes dans l'avant de la réglette, par l'entraxe d2 augmenté substantiellement entre les queues de liaison des contacts adjacents appartenant à deux paires différentes.

## Revendications

1. Réglette de raccordement comportant des contacts d'un premier type et d'un deuxième type, les contacts du premier type étant identiques les uns aux autres, et les contacts du deuxième type étant identiques les uns aux autres, lesdits contacts étant disposés en deux rangées parallèles dans la réglette, en étant en vis-à-vis d'une rangée à l'autre et en définissant des paires successives de contacts sur chaque rangée, chacun desdits contacts étant de forme plate et allongée et présentant une première partie terminale plane affectée au raccordement d'un conducteur et accessible sur une face de la réglette, une deuxième partie terminale opposée à la première, affectée à la liaison de ce contact au contact en vis-à-vis, prévue de largeur moindre que la première partie terminale et dont la projection dans le plan de ladite première partie terminale est décentrée axialement par rapport à celle-ci, et une partie intermédiaire de couplage desdites parties terminales, les deuxièmes parties terminales desdits contacts en vis à vis étant cambrées et reliées élastiquement à l'intérieur de la réglette, ***caractérisée en ce que*** les deux contacts (10, 10') de chacune desdites paires et les contacts adjacents de deux paires consécutives sont disposés symétriquement l'un par rapport à l'autre, de part et d'autre d'un plan entre ces deux contacts, et présentent entre les deuxièmes parties terminales (4, 4') des contacts de chaque paire un entraxe de valeur réduite (d1) par rapport à l'entraxe de valeur comparativement élevée (d2) entre les deuxièmes parties terminales des contacts adjacents de deux paires différentes et consécutives.

## Claims

1. A terminal strip comprising contacts of a first type and of a second type, the contacts of the first type being identical with each other, and the contacts of the second type being identical with each other, said contacts being disposed in two parallel rows in the terminal strip, facing each other in each row and defining successive pairs of contacts in each row, each of said contacts being of flat elongate shape and having a first planar terminal part for connecting a conductor accessible on one face of the terminal strip, a second terminal part opposite the first for connecting this contact to the facing contact, narrower than the first terminal part and the projection of which in the plane of said first terminal part is offset axially relative thereto, and an intermediate part for coupling said terminal parts, the second terminal parts of said facing contacts being arched and elastically connected to the inside of the terminal strip, ***characterised in that*** the two contacts (10, 10') of each of said pairs and the adjacent contacts of two consecutive pairs are disposed symmetrically to each other on respective opposite sides of a plane between the two contacts and have between the second terminal parts (4,4') of the contacts of each pair a distance between centres (d1) which is small in comparison to the relatively large distance between centres (d2) of the second terminal parts of adjacent contacts of two different consecutive pairs.

## Patentansprüche

1. Anschlußleiste mit Kontakten eines ersten Typs und eines zweiten Typs bei der die Kontakte des ersten Typs zueinander identisch sind und die Kontakte des zweiten Typs zueinander identisch sind, wobei diese Kontakte in zwei parallelen Reihen in der Leiste angeordnet sind und von einer Reihe zur anderen einander gegenüber liegen und aufeinanderfolgende Paare von Kontakten in jeder Reihe definieren und wobei jeder dieser Kontakte von flacher und länglicher Form ist und einen ersten flachen Abschlußbereich, der zum Anschließen eines Leiters dient und an einer Seite der Leiste zugänglich ist, einen dem ersten entgegengesetzten zweiten Abschlußbereich, der zum Verbinden dieses Kontakts mit dem gegenüberliegenden Kontakt dient, der mit geringerer Breite als der erste Abschlußbereich vorgesehen ist und dessen Projektion auf der Ebene dieses ersten Abschlußbereiches axial in bezug auf diesen versetzt ist, und einen zwischenliegenden Kopplungsbereich dieser Abschlußbereiche, wobei die zweiten Abschlußbereiche dieser gegenüberliegenden Kontakte gewölbt und im Innern der Leiste elastisch verbunden sind, aufweist, **dadurch gekennzeichnet, daß** die zwei Kontakte (10, 10') eines jeden dieser Paare und die angrenzenden Kontakte von zwei aufeinanderfolgenden Paaren symmetrisch zueinander auf der einen und auf der anderen Seite einer Ebenen zwischen diesen zwei Kontakten angeordnet sind und zwischen den zweiten Abschlußbereichen (4, 4') der Kontakte jedes Paars einen kleineren Mittenabstand (d1) im Verhältnis zu dem vergleichsweise großen Mittenabstand (d2) zwischen den zweiten Abschlußbereichen der angrenzenden Kontakte von zwei verschiedenen und aufeinanderfolgenden Paaren aufweisen.
